Europäisches Patentamt

European Patent Office

Office européen des brevets

(11) Veröffentlichungsnummer: **0 289 984 B1**

## (12) EUROPÄISCHE PATENTSCHRIFT

(45) Veröffentlichungstag der Patentschrift: **16.09.92**

(51) Int. Cl.⁵: **G11B 5/584**, G11B 5/265, G11B 5/29

(21) Anmeldenummer: **88107048.6**

(22) Anmeldetag: **03.05.88**

(54) **Recorder mit Spurführung.**

(30) Priorität: **06.05.87 DE 3714986**

(43) Veröffentlichungstag der Anmeldung:
**09.11.88 Patentblatt 88/45**

(45) Bekanntmachung des Hinweises auf die
Patenterteilung:
**16.09.92 Patentblatt 92/38**

(84) Benannte Vertragsstaaten:
**AT BE CH DE ES FR GB GR IT LI LU NL SE**

(56) Entgegenhaltungen:
**EP-A- 0 183 412**
**DE-A- 3 517 380**

**PATENT ABSTRACTS OF JAPAN, unexamined applications, Sektion P, Band 11, Nr. 91, 23. MUrz 1987 THE PATENT OFFICE JAPANESE GOVERNMENT Seite 159 P 558**

**PATENT ABSTRACTS OF JAPAN, unexamined applications, Sektion P, Band 10, Nr. 351, 27. November 1986 THE PATENT OFFICE JAPANESE GOVERNMENT Seite 84 P 520**

**PATENT ABSTRACTS OF JAPAN, unexami-**

**ned applications, Sektion P, Band 10, Nr. 180, 24. Juni 1986 THE PATENT OFFICE JAPANESE GOVERNMENT Seite 148 P 471**

(73) Patentinhaber: **Deutsche Thomson-Brandt GmbH**
**Postfach 2060**
**W-7730 Villingen-Schwenningen(DE)**

(72) Erfinder: **Kluth, Hans-Jürgen, Dipl.-Ing.**
**Weichselstrasse 11**
**W-7730 VS-Villingen(DE)**

**Beschreibung**

Bei einem Videorecorder mit sogenannter matrixartiger Aufzeichnung gemäß der DE-A-35 09 584 werden mit einem rotierenden und in einer Hubbewegung in Richtung seiner Achse quer zur Bandlängsrichtung rotierenden Kopfrad auf dem Magnetband aufeinanderfolgende Blöcke mit im wesentlichen parallel zur Bandkante verlaufenden Spuren geschrieben. Damit die auf dem Kopfrad angeordneten Köpfe bei der Wiedergabe genau den geschriebenen Spuren folgen, ist es dabei notwendig, zusätzlich zum Nutzsignal ein Spurführungssignal aufzuzeichnen. Aus dem Spurführungssignal wird bei der Wiedergabe eine Stellgröße erzeugt, die die Lage des Kopfes relativ zum Magnetband so steuert, daß der Kopf jeweils genau der Spur folgt. Die Stellgröße kann z.B. die Hubbewegung beeinflussen oder über einen elektromechanischen Wandler die Lage des Kopfes an der Kopftrommel ändern.

Dabei ist es bekannt (DE-A-35 17 380), am Anfang oder am Ende einer Spur über eine Länge von etwa 5 % der Spur ein Spurführungssignal aufzuzeichnen, das in nebeneinander liegenden Spuren oder Spurabschnitten vier verschiedene Frequenzen aufweist. Bei dieser Lösung geht also ein Teil der Spur für die Aufzeichnung des Nutzsignals verloren. Außerdem kann die Stellgröße nur wärend einer kurzen Zeit gewonnen werden, so daß Spurführungsfehler während der übrigen Zeit nicht erfaßt werden.

Der Erfindung liegt die Aufgabe zugrunde, den aus DE-A-35 17 380 bekannten Recorder mit Spurführung so auszubilden, daß das Spurführungssignal während der gesamten Länge der Spur aufgezeichnet werden kann, ohne daß dabei Störungen zwischen dem Spurführungssignal und dem Nutzsignal auftreten.

Diese Aufgabe wird durch die im Anspruch 1 beschriebene Merkmale gelöst. Vorteilhafte Weiterbildungen der Erfindung sind in den Unteransprüchen beschrieben.

Die Erfindung beruht auf folgender Überlegung. Der erste Kopf für das Nutzsignal hat zur Aufzeichnung hoher Frequenzen bis etwa 10 MHz eine geringe Spaltlänge und bewirkt dadurch nur eine geringe Eindringtiefe der Magnetisierung in die Magnetschicht des Bandes. Der zweite Kopf hingegen bewirkt wegen seiner großen Spaltlänge eine Magnetisierung der Magnetschicht über ihre gesamte Dicke, hat also gegenüber dem ersten Kopf eine große Eindringtiefe. Die mit dem zweiten Kopf geschriebenen Spurführungssignale werden also gewissermaßen in der Magnetschicht tief eingegraben und können dadurch eine Formatierung des Bandes entsprechend dem gewünschten Spurmuster bilden. Diese eingegrabene Formatierung wird bei der Aufzeichnung oder beim Löschvorgang durch den ersten Kopf nicht gelöscht, weil dessen Eindringtiefe gering ist. Der für das Nutzsignal vorgesehene erste Kopf wird durch das mit dem zweiten Kopf aufgezeichnete Spurführungssignal nicht beeinträchtigt, weil der erste Kopf aufgrund seiner geringen Spaltlänge im Frequenzbereich, wo der zweite Kopf empfindlich ist, praktisch unempfindlich ist. Der zweite Kopf für das Spurführungssignal wird indessen durch das Signal des ersten Kopfes auch nicht beeinträchtigt, weil der zweite Kopf für den Frequenzbereich des Nutzsignals unempfindlich ist. Die große Spaltlänge des zweiten Kopfes erfüllt also in vorteilhafter Weise mehrere Aufgaben, nämlich einmal die Durchmagnetisierung der Magnetschicht, also die große Eindringtiefe zum Zwecke der Formatierung, die hohe Empfindlichkeit bei tiefen Frequenzen unterhalb des Frequenzbereiches des Nutzsignals und die geringe Empfindlichkeit für die Frequenzen des Nutzsignals.

Die zweiten Köpfe müssen somit gesondert gespeist werden. Die Einspeisung und die Entnahme des Signals erfolgt über Drehtransformatoren mit jeweils feststehenden und rotierenden Wicklungen. Diese Wicklungen sind vorzugsweise konzentrisch angeordnet, wobei der stationäre Trommelteil mit den stationären Wicklungen und der rotierende Trommelteil mit den rotierenden Wicklungen einander in Axialrichtung oder in Radialrichtung gegenüberliegen. Für die zweiten Köpfe sind also zusätzliche Wicklungen eines Drehtransformators erforderlich. Der Aufwand dafür läßt sich gemäß einer Weiterbildung der Erfindung gering halten. Es ist bekannt, zwischen den einzelnen, koaxial angeordneten Wicklungen des Drehtransformators Kurzschlußwicklungen vorzusehen, die die einzelnen Wicklungen voneinander abschirmen. Die Wicklungen für die zweiten Köpfe können an der Stelle dieser Kurzschlußwicklungen liegen, d.h. zwischen den Wicklungen für das Nutzsignal, und die Funktion der zur Abschirmung dienenden Kurzschlußwicklungen übernehmen. Dazu werden die Wicklungen für die zweiten Köpfe entsprechend niederohmig eingespeist, so daß für die Wicklungen für die ersten Köpfe die Wicklungen der zweiten Köpfe als Kurzschlußwicklung zur Abschirmung dienen.

Der Recorder ist insbesondere zur Aufzeichnung von digitalen Videosignalen und Audiosignalen geeignet. Die Erfindung ist grundsätzlich anwendbar bei einer Schrägspuraufzeichnung, bei einer Längsspuraufzeichnung und bei einer sogenannten matrixartigen Aufzeichnung, d.h. immer dann, wenn Spuren oder Spurabschnitte nebeneinander liegen und der Kopf zur Erzielung eines geringen Übersprechens jeweils genau der aufgezeichneten Spur folgen muß.

Die Erfindung wird anhand der Zeichnung an einem Ausführungsbeispiel erläutert. Darin zeigen
Fig. 1    im Prinzip den Aufbau der beiden Köpfe,

EP 0 289 984 B1

Fig. 2 die Magnetisierungswirkung der Kopfe auf die Magnetschicht,

Fig. 3 die Frequenzbereiche für den ersten Kopf und den zweiten Kopf,

Fig. 4 im Prinzip die Ausbildung eines Drehtransformators zur Übertragung der Signale für den ersten Kopf und den zweiten Kopf,

Fig. 5 die Kopftrommel und das Magnetband für eine matrixartige Aufzeichnung,

Fig. 6 die Anordnung der Spuren auf dem Magnetband bei einer derartigen Aufzeichnung und

Fig. 7 eine weitere Ausbildung des Drehtransformators.

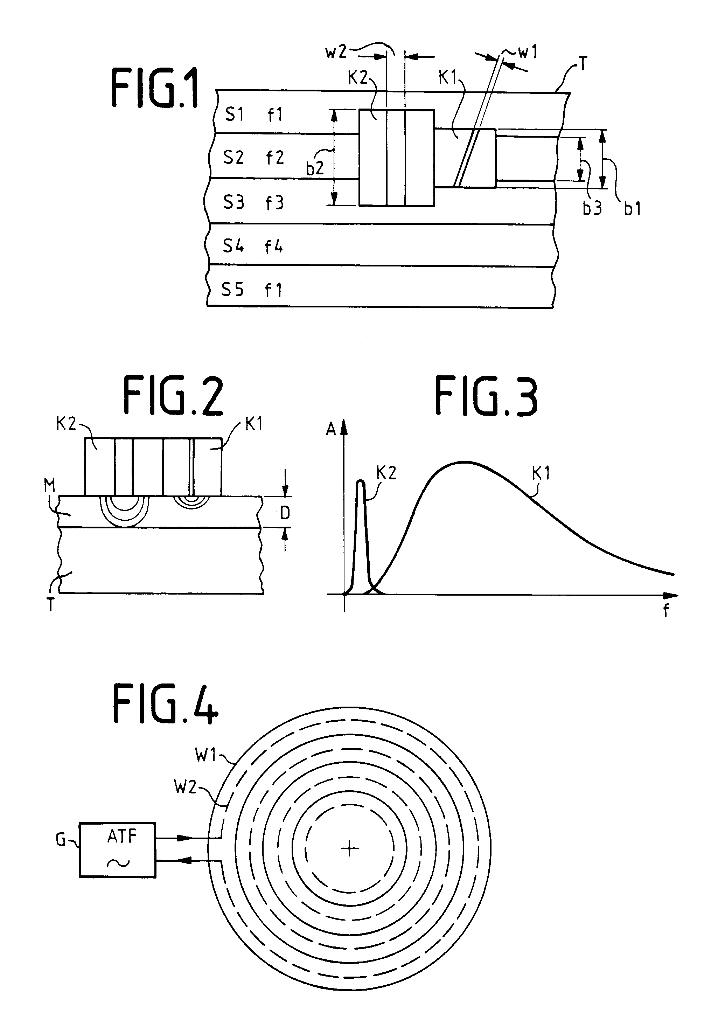

In Fig. 1 sind auf dem Magnetband T nebeneinander liegende Spuren S1 bis S5 ohne Abstand aufgezeichnet. Die Aufzeichnung erfolgt mit dem Kopf K1, dessen Spaltweite oder Spaltlänge w1, also die Ausdehnung des Spaltes in Richtung der Magnetlinien, gering ist und dessen Spaltbreite b1, also die Ausdehnung quer zur Spurrichtung, etwa gleich der Spurbreite b3 ist. Mit dem Kopf K1 wird das Nutzsignal aufgezeichnet und abgetastet. Mit dem Kopf K1 ist der zweite Kopf K2 verbunden. Dessen Spaltlänge w2 ist wesentlich größer als w1, während die Spaltbreite b2 größer als die Breite b3 einer Spur S ist. Mit dem Kopf K2 wird ein Spurführungssignal aufgezeichnet, das jeweils für vier nebeneinander liegende Spuren S1 bis S4 vier verschieden Frequenzen f1, f2, f3, f4 aufweist. Wenn die Köpfe K1, K2 die richtige Lage zur Spur S2 haben, liefert der Kopf K2 das Spurführungssignal mit der Frequenz f2 und Spurführungssignale mit den Frequenzen f1 und f3, die letzten beiden mit gleicher Amplitude. Wenn die Köpfe K1, K2 durch seiner Spurführungsfehler nach oben abweichen, wird die Amplitude des Spurführungssignals mit der Frequenzen f1 größer und die mit der Frequenz f3 kleiner. Dadurch wird eine Stellgröße erzeugt, die die Köpfe K1, K2 in Fig. 1 nach unten auf die Spur S2 zurückführt. Entsprechendes gilt, wen die Köpfe K1 K2 nach unten von der Spur S2 abweichen und zu weit auf die Spur S3 gelangen.

Die in Fig. 1 dargestellten Maße haben dabei z.B. folgende Werte:

| | |
|---|---|
| w1 = 0,6 $\mu$m | f1 = 50 kHz |
| w2 = 72 $\mu$m | f2 = 67 kHz |
| b1 = 12 $\mu$m | f3 = 76 kHz |
| b2 = 14 $\mu$m | f4 = 59 kHz |
| b3 = 10 $\mu$m | |

Fig. 2 zeigt, daß der Kopf K2 mit der großen Spaltlänge w2 die Magnetschicht M des Magnetbandes T über die ganze Tiefe D magnetisiert und somit die mit K2 aufgezeichneten Spurführungssignale mit großer Eindringtiefe aufgezeichnet werden. Entsprechend hat der Kopf K1 mit der geringen Spaltlänge nur eine geringe Eindringtiefe. Der Kopf K1 kann das mit dem Kopf K2 aufgezeichnete Spurführungssignal daher nicht löschen. Vielmehr bildet das mit K2 geschriebene, tief eingegrabene Spurführungssignal eine mit K1 nicht löschbare Formatierung des Magnetbandes T.

Fig. 3 zeigt die Frequenzbereiche, in denen die beiden Köpfe K1, K2 ihre Empfindlichkeit aufweisen. Es ist ersichtlich, daß durch die stark unterschiedlichen Spaltlängen w1 und w2 zwei voneinander getrennte Frequenzbereiche geschaffen werden, die jeweils für das Signal, nämlich einmal das Nutzsignal mit Freqenzen von etwa 100 kHz bis 10 MHz und zum anderen für die das Spurführungssignal mit Frequenzen im Bereich von etwa 50 kHz optimal sind.

Fig. 4 zeigt vier konzentrische Wicklungen W1 eines Drehübertragers, mit dem die Signale vier Köpfen K1 zugeführt werden. Zwischen den Wicklungen W1 liegen Wicklungen W2 für die Übertragung der Signale zu den vier Köpfen K2. Die Signale kommen von dem Generator G, der einen besonders niederohmigen Ausgang aufweist. Dadurch wirken die Wicklungen W2 außer ihrer Übertragung der Spurführungssignale zu den Köpfen K2 zusätzlich im Sinne einer Abschirmung als Kurzschlußwicklungen zwischen den Wicklungen W1.

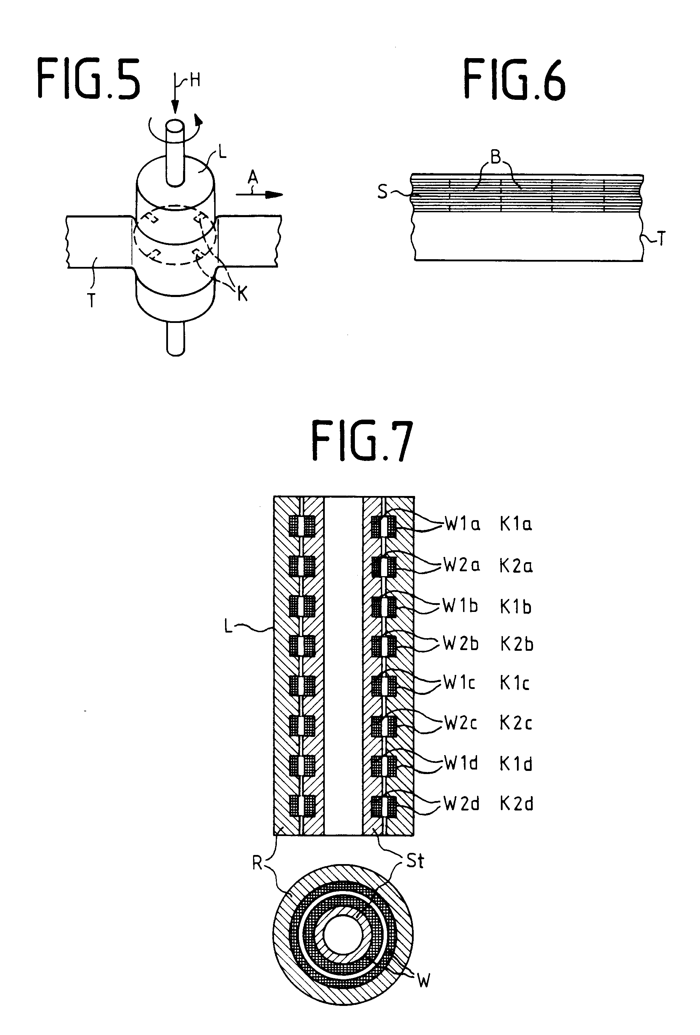

Fig. 5 zeigt eine Kopftrommel L mit vier Köpfen K, die jeweils aus den Köpfen K1 und K2 bestehen. Die Kopftrommel L rotiert und führt eine Hubbewegung H quer zur Transportrichtung A des Magnetbandes T aus. Durch zeitversetzte Steuerung jeweils eines der Köpfe K wird auf dem Magnetband T ein matrixartiges Spurmuster mit jeweils Blökken mit parallel zur Bandkante verlaufenden Spuren geschrieben. Für eine derartige Aufzeichnung ist die anhand der Fig. 1 bis 4 beschriebene Lösung für die Aufzeichnung der Spurführungssignale besonders geeignet.

Fig. 6 zeigt die mit der Anordnung gemäß Fig. 5 auf dem Magnetband T aufeinanderfolgend geschriebenen Blöcke B jeweils mit Spuren S, die im wesentlichen parallel zur Bandkante verlaufen.

Fig. 7 zeigt eine Abwandlung der Anordnung gemäß Fig. 4, bei der die Wicklungen für die insgesamt acht Köpfe, nämlich vier Köpfe K1 und vier Köpfe K2, nicht wie in Fig. 4 in einer Ebene radial versetzt angeordnet sind, sondern mit gleichem Durchmesser in Axialrichtung versetzt liegen. Die Kopftrommel L

3

enthält den auch die Köpfe tragenden Rotor R jeweils mit einer Wicklung eines Übertragers und den Stator St jeweils mit der anderen Wicklung eines Übertragers. Den jeweils vier Köpfen K1a - K1d sind jeweils Wicklungen W1a-W1d und entsprechend den vier Köpfen K2a -K2d Wicklungen W2a - W2d zugeordnet. Die Wicklungen W2 für die Köpfe K2 liegen wie in Fig. 4 wiederum zwischen den Wicklungen W1 für die Köpfe K1 und bewirken eine Abschirmung zwischen diesen Wicklungen. Der Abstand zwischen dem Rotor R und dem Stator St in Radialrichtung, also der Spalt zwischen Rotor R und Stator St, beträgt etwa 50 $\mu$m.

Die Köpfe K1 und die Köpfe K2 sind so angeordnet und so ausgebildet, daß unabhängig voneinander beide Köpfe K1, K2 gleichzeitig schreiben und lesen oder beide Köpfe gleichzeitig schreiben oder auch beide Köpfe gleichzeitig lesen können. Alle Übertragungskanäle des Drehtransformators für die einzelnen Köpfe K1 und K2 haben durch gleiche Auslegung der Wicklungen identische Übertragungseigenschaften und benötigen daher keine unterschiedlichen Kanalentzerrungen. Der Kopf K2 dient vorzugsweise ausschließlich zur Erfassung der Spurabweichung. Der Kopf K1 kann dann eine Spaltbreite b1 haben, die gleich der Spurbreite b3 einer Spur S ist. Bei richtiger Spurführung entsteht dann am Kopf K1 kein Übersprechen aus den Nachbarspuren, was insbesondere für die Aufzeichnung von digitalen Signalen vorteilhaft ist.

**Patentansprüche**

1. Recorder mit Spurführung mit mindestens einem zur Aufzeichnung und Wiedergabe eines Nutzsignals auf einem Magnetband (T) dienenden und auf einem rotierenden Kopfrad angebrachten ersten Kopf (K1) und mit Aufzeichnung eines Spurführungssignals, aus dem bei der Wiedergabe eine Stellgröße für die Lage des Kopfes (K1) relativ zur Spur (S) gewonnen wird, **dadurch gekennzeichnet,** daß für die Aufzeichnung und Wiedergabe des Spurführungssignals ein zweiter mit dem ersten Kopf fest verbundener Kopf (K2) vorgesehen ist, dessen Spaltlänge (w2) gegenüber der Spaltlänge (w1) des ersten Kopfes (K1) so groß ist, daß er eine Aufzeichnung im wesentlichen über die ganze Dicke (D) der Magnetschicht (M) des Bandes (T) bewirkt und seine Maximalempfindlichkeit bei so tiefen Frequenzen liegt, für die der erste Kopf (K1) unempfindlich ist.

2. Recorder nach Anspruch 1, **dadurch gekennzeichnet,** daß bei mehreren Köpfen (K1) für das Nutzsignal jedem dieser Köpfe (K1) ein zweiter Kopf (K2) zugeordnet ist.

3. Recorder nach Anspruch 1, **dadurch gekennzeichnet,** daß die Spalte der zweiten Köpfe (K2) keinen Azimutwinkel aufweisen.

4. Recorder nach Anspruch 1, **dadurch gekennzeichnet,** daß die Länge (w2) des Spaltes des zweiten Kopfes (K2) etwa gleich der halben geometrischen Periode des auf dem Band (T) geschriebenen Spurführungssignals ist.

5. Recorder nach Anspruch 1, **dadurch gekennzeichnet,** daß die Breite (b2) des zweiten Kopfes (K2) größer ist als die Breite (b3) der mit dem ersten Kopf (K1) auf dem Band (T) geschriebenen Spuren (S).

6. Recorder nach Anspruch 1, **dadurch gekennzeichnet,** daß das Spurführungssignal jeweils für vier nebeneinander liegende Spuren (S) oder Spurabschnitte vier verschiedene Frequenzen (f1, f2, f3, f4) aufweist und die Frequenzen (f1 - f4) in der Größenordnung von 20 - 100 kHz liegen.

7. Recorder nach Anspruch 2, **dadurch gekennzeichnet,** daß die konzentrischen Wicklungen (W2) der Rotationsübertrager für die zweiten Köpfe (K2) zwischen den Wicklungen (W1) der Rotationsübertrager für die ersten Köpfe (K1) liegen (Fig. 4).

8. Recorder nach Anspruch 1, **dadurch gekennzeichnet,** daß die konzentrischen Wicklungen (W2) der Rotationsübertrager für die zweiten Köpfe (K2) so niederohmig mit dem Spurführungssignal gespeist sind, daß sie als Abschirmungswicklungen zwischen den Wicklungen (W1) der Rotationsübertrager für die ersten Köpfe (K1) wirken.

9. Recorder nach Anspruch 1, **dadurch gekennzeichnet,** daß die beiden Köpfe (K1, K2) so ausgebildet sind, daß unabhängig voneinander beide Köpfe (K1, K2) entweder gleichzeitig schreiben und lesen oder beide schreiben oder beide lesen können.

**10.** Recorder nach Anspruch 8, **dadurch gekennzeichnet,** daß die Wicklungen (W1, W2) gleichen Durchmesser aufweisen und in Axialrichtung versetzt auf einem Rotor (R) und einem Stator (St) einer Kopftrommel liegen (Fig. 7).

**Claims**

**1.** A recorder with track guidance with at least one first head (K1) which is arranged on a rotating head wheel and serves to record and playback a useful signal on a magnetic tape (T) and with recording of a track guidance signal, from which on playback there is obtained a control variable for the position of the head (K1) relative to the track (S), **characterised in that** a second head (K2) connected firmly to the first head is provided for recording and playback of the track guidance signal, its gap width (w2) being so large as compared to the gap width (w1) of the first head (K1) that it causes recording substantially over the whole thickness (D) of the magnetic layer (M) of the tape (T) and its maximum sensitivity lies at such low frequencies to which the first head (K1) is insensitive.

**2.** A recorder according to claim 1, **characterised in that** if there are several heads (K1) for the useful signal a second head (K2) is associated with each of these heads (K1).

**3.** A recorder according to claim 1, **characterised in that** the gaps of the second heads (K2) do not have any azimuth angle.

**4.** A recorder according to claim 1, **characterised in that** the width (w2) of the gap of the second head (K2) is about equal to half the geometric period of the track guidance signal written on the tape (T).

**5.** A recorder according to claim 1, **characterised in that** the width (b2) of the second head (K2) is greater than the width (b3) of the tracks (S) written on the tape (T) by the first head (K1).

**6.** A recorder according to claim 1, **characterised in that** the track guidance signal has for every four adjacent tracks (S) or track portions four different frequencies (f1, f2, f3, f4) and the frequencies (f1 - f4) are in the order of magnitude of 20 - 100 kHz.

**7.** A recorder according to claim 2, **characterised in that** the concentric windings (W2) of the rotation transformers for the second heads (K2) are between the windings (W1) of the rotation transformers for the first heads (K1) (Fig. 4).

**8.** A recorder according to claim 1, **characterised in that** the concentric windings (W2) of the rotation transformers for the second heads (K2) are fed with the track guidance signal at such a low resistance that they act as screening windings between the windings (W1) of the rotation transformers for the first heads (K1).

**9.** A recorder according to claim 1, **characterised in that** the two heads (K1, K2) are so formed that independently of each other the two heads (K1, K2) either write and read at the same time or can both write or both read.

**10.** A recorder according to claim 8, **characterised in that** the windings (W1, W2) have the same diameter and lie axially offset on a rotor (R) and a stator (St) of a head drum (Fig. 7).

**Revendications**

**1.** Enregistreur avec guidage de piste avec au moins une première tête (K1) qui sert à l'enregistrement et à la reproduction d'un signal utile sur une bande magnétique (T) et qui est fixée sur une roue de têtes rotative et avec enregistrement d'un signal de guidage de piste à partir duquel une variable réglante pour la position de la tête (K1) par rapport à la piste (S) est obtenue lors de la reproduction, **caractérisé en ce** qu'une seconde tête (K2), qui est reliée de manière fixe à la première tête, est prévue pour l'enregistrement et la reproduction du signal de guidage de piste, seconde tête dont la longueur de l'entrefer (w2) est, par rapport à la longueur de l'entrefer (w1) de la première tête (K1), si grande qu'elle provoque un enregistrement essentiellement sur toute l'épaisseur (D) de la couche magnétique (M) de la bande (T) et que sa sensibilité maximale se situe à des fréquences très basses pour lesquelles la première tête (K1) est insensible.

2. Enregistreur selon la revendication 1, **caractérisé en ce** qu'une seconde tête (K2) est affectée, dans le cas de plusieurs têtes (K1) pour le signal utile, à chacune de ces têtes (K1).

3. Enregistreur selon la revendication 1, **caractérisé en ce** que les entrefers des secondes têtes (K2) n'ont pas d'angles azimutaux.

4. Enregistreur selon la revendication 1, **caractérisé en ce** que la longueur (w2) de l'entrefer de la seconde tête (K2) est à peu près égale à la moitié de la période géométrique du signal de guidage de piste enregistré sur la bande (T).

5. Enregistreur selon la revendication 1, **caractérisé en ce** que la largeur (b2) de la seconde tête (K2) est supérieure à la largeur (b3) des pistes (S) enregistrées avec la première tête (K1) sur la bande magnétique (T).

6. Enregistreur selon la revendication 1, **caractérisé en ce** que le signal de guidage de piste présente quatre fréquences différentes (f1, f2, f3, f4) respectivement pour quatre pistes (S) ou portions de pistes situées l'une à côté de l'autre et que les fréquences (f1 - f4) sont de l'ordre de 20 à 100 kHz.

7. Enregistreur selon la revendication 2, **caractérisé en ce** que les enroulements concentriques (W2) des transformateurs rotatifs pour les secondes têtes (K2) se trouvent entre les enroulements (W1) des transformateurs rotatifs pour les premières têtes (K1) (fig. 4).

8. Enregistreur selon la revendication 1, **caractérisé en ce** que les enroulements concentriques (W2) des transformateurs rotatifs pour les secondes têtes (K2) sont alimentés avec une impédance si basse avec le signal de guidage de piste qu'ils agissent comme des enroulements de protection par écran entre les enroulements (W1) des transformateurs rotatifs pour les premières têtes (K1).

9. Enregistreur selon la revendication 1, **caractérisé en ce** que les deux têtes (K1, K2) sont configurées de telle manière qu'indépendamment l'une de l'autre les deux têtes (K1, K2) peuvent, soit enregistrer et lire simultanément, soit toutes les deux enregistrer, soit toutes les deux lire.

10. Enregistreur selon la revendication 8, **caractérisé en ce** que les enroulements (W1, W2) ont le même diamètre et qu'ils sont décalés dans le sens axial sur un rotor (R) et un stator (St) d'un tambour de têtes (figure 7).

# FIG.1

S1  f1

S2  f2

S3  f3

S4  f4

S5  f1

w2, K2, K1, w1, T, b2, b3, b1

# FIG.2

K2, K1, M, D, T

# FIG.3

A, K2, K1, f

# FIG.4

W1, W2, G, ATF, ~

# FIG.5

# FIG.6

# FIG.7

W1a K1a
W2a K2a
W1b K1b
W2b K2b
W1c K1c
W2c K2c
W1d K1d
W2d K2d